(19) Europäisches Patentamt
European Patent Office
Office européen des brevets

(11) **EP 2 484 927 A1**

(12) **EUROPEAN PATENT APPLICATION**
published in accordance with Art. 153(4) EPC

(43) Date of publication:
**08.08.2012  Bulletin 2012/32**

(51) Int Cl.:
*F16C 33/44* (2006.01)   *B22D 17/00* (2006.01)
*B22D 17/22* (2006.01)   *F16C 19/06* (2006.01)
*F16C 33/41* (2006.01)

(21) Application number: **10820349.8**

(22) Date of filing: **14.09.2010**

(86) International application number:
**PCT/JP2010/065820**

(87) International publication number:
**WO 2011/040230 (07.04.2011 Gazette 2011/14)**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **29.09.2009   JP 2009224874**

(71) Applicant: **NTN Corporation
Osaka-shi, Osaka 550-0003 (JP)**

(72) Inventors:
• **FUJIWARA, Hiroki
Kuwana-shi
Mie 511-0867 (JP)**

• **SHIMAZU, Eiichirou
Kuwana-shi
Mie 511-0867 (JP)**
• **MORI, Masatsugu
Kuwana-shi
Mie 511-0867 (JP)**
• **ISHII, Tetsuto
Kuwana-shi
Mie 511-0867 (JP)**

(74) Representative: **Bockhorni & Kollegen
Elsenheimerstraße 49
80687 München (DE)**

(54) **CAGE, ANTI-FRICTION BEARING, MACHINE TOOL, AND METHOD OF MANUFACTURING CAGE**

(57)     A cage (14) is made of a magnesium alloy, the magnesium alloy being molded by means of injection molding using a mold (60) including a cavity portion (61) having a shape corresponding to a shape of the cage (14), and has a shape resulting from being forcedly extracted from the mold (60). As a result, a cage made of a magnesium alloy of high strength and having a shape resulting from being forcedly extracted from a mold, a rolling bearing including the cage, a machine tool including the rolling bearing, and a method of manufacturing the cage can be provided.

FIG.3

Printed by Jouve, 75001 PARIS (FR)

EP 2 484 927 A1

**Description**

TECHNICAL FIELD

The present invention relates to a cage, a rolling bearing, a machine tool, and a method of manufacturing the cage, and more particularly to a cage made of a magnesium alloy, a rolling bearing including the cage, a machine tool including the rolling bearing, and a method of manufacturing the cage.

BACKGROUND ART

Among rolling bearings, a ball bearing is often used compared to a roller bearing in applications where high speed and low torque are required. Among ball bearings, a deep groove ball bearing is widely used. In the deep groove ball bearing, a corrugated cage formed by press molding of a steel plate, and a crown-shaped cage formed by injection molding of resin are widely used as a cage for holding balls which are rolling elements. The crown-shaped cage is made of nylon resin usually reinforced with glass fiber and the like.

As an example of reducing torque of the crown-shaped cage, for example, Japanese Patent Laying-Open No. 2000-161365 (Patent Literature 1) discloses a crown-shaped cage in which elastic pieces (claw portions) of the cage are formed to be inclined in a radial direction of the cage. Japanese Patent Laying-Open No. 2001-271841 (Patent Literature 2) discloses a crown-shaped cage in which one end and the other end of a circumferential concave surface on opposing end portions of each pocket portion are formed such that they can abut a rolling surface of a ball.

It has also been proposed to apply a magnesium alloy having high strength to a cage. For example, Japanese Patent Laying-Open No. 2000-213544 (Patent Literature 3) proposes that a cage manufactured by semi-molten molding of a magnesium alloy is applicable to applications where higher strength is required while weight reduction is achieved.

CITATION LIST

PATENT LITERATURE

PTL 1:    Japanese Patent Laying-Open No. 2000-161365
PTL 2:    Japanese Patent Laying-Open No. 2001-271841
PTL 3:    Japanese Patent Laying-Open No. 2000-213544

SUMMARY OF INVENTION

TECHNICAL PROBLEM

Friction torque of a rolling bearing is partially generated by shearing of an oil film of lubricant between a rolling element and a cage. In order to reduce torque, therefore, it is desirable that an area of contact between the rolling element and the cage be small. In the cages described in Japanese Patent Laying-Open No. 2000-161365 and Japanese Patent Laying-Open No. 2001-271841, however, reducing the area of contact between the rolling element and the cage results in inability to ensure sufficient strength.

In addition, a cage can be made thinner by applying a magnesium alloy to the cage. In the cage described in Japanese Patent Laying-Open No. 2000-213544, however, when a cage made of a magnesium alloy and molded by means of injection molding is actually made, high strength and fatigue characteristics which should originally be obtained cannot be sufficiently obtained due to involvement of gas in a mold and formation of a pure magnesium phase which is a segregation phase.

The present invention was made in view of the above problems, and an object of the present invention is to provide a cage made of a magnesium alloy of high strength and having a shape resulting from being forcedly extracted from a mold, a rolling bearing including the cage, a machine tool including the rolling bearing, and a method of manufacturing the cage.

SOLUTION TO PROBLEM

A cage of the present invention is a cage for holding a rolling element in a rolling bearing, including a holding portion for rollably holding the rolling element, and a main portion integrally coupled to the holding portion, in which the cage including the holding portion and the main portion is made of a magnesium alloy, the magnesium alloy being molded by means of injection molding using a mold including a cavity portion having a shape corresponding to a shape of the cage, and has a shape resulting from being forcedly extracted from the mold.

The present inventors analyzed a cause of the inability to obtain high strength and fatigue characteristics of the cage made of a magnesium alloy and molded by means of injection molding, which should originally be obtained, and considered how to address the problem. As a result, the inventors obtained the following findings and arrived at the present invention.

Specifically, when fabricating a cage made of a magnesium alloy by means of injection molding, the magnesium alloy including a liquid phase flows to fill the inside (cavity portion) of a mold. On this occasion, a region at which flows of the magnesium alloy including a liquid phase are merged (so-called "weld portion") is formed depending on the shape of the cage and the number of gates. Here, a magnesium alloy for injection molding is supplied into a mold with its viscosity significantly lower than that of general resin. Further, a magnesium alloy has smaller specific heat than that of general resin, is therefore excellent in thermal conductivity, and is accordingly solidified fast. To address such characteristics of the magnesium alloy, the magnesium alloy is supplied into the mold at a rate faster by several times or approximately ten times than during injection molding of general resin. This is likely to cause turbulent flows of the magnesium alloy. Accordingly, gas (such as air) in the mold is likely to be involved therein. As a result, the gas is contained in the region at which the flows of the magnesium alloy are merged (weld portion), causing a void-including portion including a void to be formed. That is, the void-including portion is a portion at which the flows of the magnesium alloy have been merged, and which includes a void by containing the gas in the mold. In a cage made of a magnesium alloy, high strength and fatigue characteristics which should originally be obtained cannot be sufficiently obtained due to reduction in strength caused by the void in the void-including portion.

In contrast, the cage of the present invention is formed after the void-including portion, which includes a void formed by the merging of the flows of the magnesium alloy including a liquid phase, is formed in the magnesium alloy, and the void-including portion is pushed out of a cavity portion. Thus, strength reduction due to the void-including portion including a void remaining in the cage is suppressed, thereby providing a cage made of a magnesium alloy and having a light weight and high strength. Further, the cage is preferably manufactured by injecting, into the mold, a magnesium alloy controlled to only have a liquid phase (controlled to not include a solid phase) by heating to fall within a temperature range equal to or higher than the melting point thereof. Accordingly, a cage made of the magnesium alloy, in which formation of a pure magnesium phase which is a segregation phase ($\alpha$ phase) is suppressed and which has better fatigue strength, can be provided.

The cage of the present invention is molded into a shape resulting from being forcedly extracted from a mold. For a shape of a cage resulting from being forcedly extracted from a mold, high strength is required. While a cage made of a magnesium alloy and molded by means of conventional injection molding cannot achieve sufficiently high strength, high strength can be achieved by the injection molding of the present invention described above. Thus, the cage of the present invention may be formed into a shape resulting from being forcedly extracted from the mold. Examples of a cage having a shape resulting from being forcedly extracted from a mold include a crown-shaped cage and a window type cage. Examples of a cage having a shape resulting from being forcedly extracted from a mold also include a cage formed of a plurality of components and fixed by snap fitting, for example. A cage in a crown shape is required to have high specific rigidity because its claw portions are likely to be deflected. Hence, the cage of the present invention made of the magnesium alloy and thus having high specific rigidity is suitably employed for a crown-shaped cage.

The cage of the present invention is made of the magnesium alloy by the injection molding of the present invention, and can thus achieve rigidity similar to that of a conventional cage made of resin even when made thinner than the conventional cage. Further, the cage of the present invention can be made less likely to be deformed due to centrifugal force during use, and can thus be used for higher-speed rotation than a conventional cage made of resin.

Further, according to the cage of the present invention, a pocket portion of the cage can be made thin, thereby reducing an area of contact between a rolling element and the pocket portion. This can reduce friction torque generated by shearing of an oil film of lubricant between the rolling element and the pocket portion.

Moreover, according to the cage of the present invention, a continuously usable temperature (UL long-term heatproof temperature (no impact)) of fiber-reinforced 66 nylon resin containing 25% by mass of glass fiber which is an example of a material for a conventional cage made of resin is approximately 120°C, whereas a magnesium alloy is strong enough to withstand a service temperature limit of bearing steel. Accordingly, the material for the cage does not limit the service temperature of the bearing.

Furthermore, the cage of the present invention molded by means of injection molding of the magnesium alloy can readily be molded into a shape resulting from being forcedly extracted from a mold having a complicated shape. In addition, the cage of the present invention molded by means of injection molding is better in mass production than a general cage made of metal and manufactured by machining such as cutting.

Preferably, the cage described above is extracted, after the injection molding, from the mold having a temperature of 250°C or higher and 350°C or lower.

By maintaining the mold temperature during release of the cage from the mold to be equal to or higher than a temperature close to a temperature at which the magnesium alloy exhibits plastic deformability, e.g., to be equal to or higher than 250°C, the magnesium alloy can be made less brittle. The cage can thus be released readily from the mold, thereby improving working accuracy. The mold temperature is preferably maintained at 280°C or higher. The mold temperature is further preferably maintained at 300°C or higher. While being acceptable in terms of injection molding as long as being lower than the melting point of the magnesium alloy, the mold temperature is preferably maintained at 350°C or lower since a higher temperature requires a longer cooling period.

Preferably, in the cage described above, the magnesium alloy is one of Mg (magnesium)-Al(aluminum)-Zn (zinc)-Mn(manganese)-based, Mg-Al-Mn-based, and Mg-Al-Si(silicon)-Mn-based.

The Mg-Al-Zn-Mn-based, Mg-Al-Mn-based, and Mg-Al-Si-Mn-based magnesium alloys are suitable for injection molding. By employing such magnesium alloy, the cage of the present invention can be readily manufactured. Examples of the Mg-Al-Zn-Mn-based magnesium alloy include AZ91D of the ASTM standard. Examples of the Mg-Al-Mn-based magnesium alloy include AM60B of the ASTM standard. Examples of the Mg-Al-Si-Mn-based magnesium alloy include AS41A of the ASTM standard.

A rolling bearing of the present invention includes a raceway member, a plurality of rolling elements arranged in contact with the raceway member, and the cage of the present invention described above for rollably holding the rolling element.

In the rolling bearing of the present invention, the cage made of the magnesium alloy and having a light weight and high strength in the present invention is employed. As a result, according to the rolling bearing of the present invention, a highly reliable rolling bearing suitable for high-speed rotation can be provided.

A machine tool of the present invention includes a main shaft of the machine tool, a housing disposed opposite to an outer circumferential surface of the main shaft, and the rolling bearing of the present invention described above for rotatably supporting the main shaft relative to the housing.

A main shaft of a machine tool rotates at a very high rotating speed. Hence, a cage of a rolling bearing for supporting it (machine tool rolling bearing) is required to have high strength and a light weight. Further, when rigidity is insufficient for centrifugal force resulting from the high rotating speed of the machine tool rolling bearing, the cage is deformed to disadvantageously result in lowered rotation precision of the bearing (NRRO (Non-Repeatable Run-Out); increased asynchronous vibration) and greater heat generation in the bearing.

The machine tool of the present invention includes the rolling bearing of the present invention having the cage made of the magnesium alloy and having not only high strength and a light weight but also high specific rigidity. Accordingly, a highly reliable machine tool suitable for high-speed rotation can be provided.

A method of manufacturing a cage of the present invention is a method of manufacturing a cage for holding a rolling element in a rolling bearing. This manufacturing method includes the steps of causing a liquid phase of a magnesium alloy by heating the magnesium alloy, molding the magnesium alloy, which includes the liquid phase caused, into a shape for being forcedly extracted from a mold of the cage, by injecting the magnesium alloy into the mold including a cavity portion having a shape corresponding to a shape of the cage to fill the cavity portion with the magnesium alloy, and extracting, from the mold, the cage made of the magnesium alloy thus molded into the shape for being forcedly extracted from the mold of the cage. In the step of molding the magnesium alloy into the shape for being forcedly extracted from the mold of the cage, a void-including portion, which includes a void formed by merging of flows of the magnesium alloy including the liquid phase, is formed in the magnesium alloy, and the void-including portion is pushed out of the cavity portion.

In the method of manufacturing a cage of the present invention, the void-including portion, which includes a void formed by merging of flows of the magnesium alloy including the liquid phase, is formed in the magnesium alloy, and the void-including portion is pushed out of the cavity portion. Thus, strength reduction due to the void-including portion including a void remaining in the cage is suppressed. As a result, according to the method of manufacturing a cage of the present invention, a cage made of a magnesium alloy and having a light weight and high strength can be manufactured.

In the method of manufacturing a cage of the present invention, the cage is formed into a shape resulting from being forcedly extracted from the mold. A cage in a crown shape is required to have high specific rigidity because its claw portions are likely to be deflected. Hence, the method of manufacturing a cage of the present invention capable of manufacturing the cage, which is made of the magnesium alloy and thus has high specific rigidity, is suitably employed for manufacturing a crown-shaped cage.

Preferably, in the above method of manufacturing a cage, in the step of extracting the cage from the mold, a temperature of the mold is set to 250°C or higher and 350°C or lower. By maintaining the mold temperature during release of the cage from the mold to be equal to or higher than a temperature close to a temperature at which the magnesium alloy exhibits plastic deformability, e.g., to be equal to or higher than 250°C, the magnesium alloy can be made less brittle. The cage can thus be released readily from the mold, thereby improving production efficiency. The mold temperature is preferably maintained at 280°C or higher. The mold temperature is further preferably maintained at 300°C or higher. While being acceptable in terms of injection molding as long as being lower than the melting point of the magnesium alloy, the mold temperature is preferably maintained at 350°C or lower since a higher temperature requires a longer cooling period.

of the magnesium alloy, the mold temperature is preferably maintained at 350°C or lower since a higher temperature requires a longer cooling period.

ADVANTAGEOUS EFFECTS OF INVENTION

As has been described, according to the cage, the rolling bearing, the machine tool, and the method of manufacturing the cage of the present invention, a cage made of a magnesium alloy of high strength and having a shape resulting from being forcedly extracted from a mold, a rolling bearing including the cage, a machine tool including the rolling bearing, and a method of manufacturing the cage can be provided.

BRIEF DESCRIPTION OF DRAWINGS

Fig. 1 is a schematic cross sectional view showing a structure around a main shaft of a machine tool including a rolling bearing having a cage in a first embodiment of the present invention.
Fig. 2 is a schematic partial cross sectional view showing a structure of the rolling bearing having the cage in the first embodiment of the present invention.
Fig. 3 is a schematic perspective view showing a structure of the cage in the first embodiment of the present invention.
Fig. 4 is a schematic partial cross sectional view showing a structure of a first modification of the rolling bearing having the cage in the first embodiment of the present invention.
Fig. 5 is a schematic partial cross sectional view showing a structure of a second modification of the rolling bearing having the cage in the first embodiment of the present invention.
Fig. 6 is a schematic partial cross sectional view showing a structure of a third modification of the rolling bearing having the cage in the first embodiment of the present invention.
Fig. 7 is a schematic partial cross sectional view showing a structure of a fourth modification of the rolling bearing having the cage in the first embodiment of the present invention.
Fig. 8 is a schematic partial cross sectional view showing a structure of a fifth modification of the rolling bearing having the cage in the first embodiment of the present invention.
Fig. 9 is a schematic partial cross sectional view showing a structure of an angular contact ball bearing in the first embodiment of the present invention.
Fig. 10 is a schematic diagram showing a structure of an injection molding device in the first embodiment of the present invention.
Fig. 11 is a schematic diagram showing a structure of a mold of the injection molding device in the first embodiment of the present invention.
Fig. 12 is a flowchart schematically illustrating steps of manufacturing the cage in the first embodiment of the present invention.
Fig. 13 is a schematic diagram showing a structure of a mold of an injection molding device in a second embodiment of the present invention.
Fig. 14 is a diagram for explaining shearing resistance between a ball and the cage in the embodiment.
Fig. 15 is a schematic partial cross sectional view showing a structure of a rolling bearing including a conventional cage.
Fig. 16 is a diagram for explaining shearing resistance between a ball and the cage in a conventional example.

DESCRIPTION OF EMBODIMENTS

Embodiments of the present invention will be described below with reference to the drawings.

(First Embodiment)

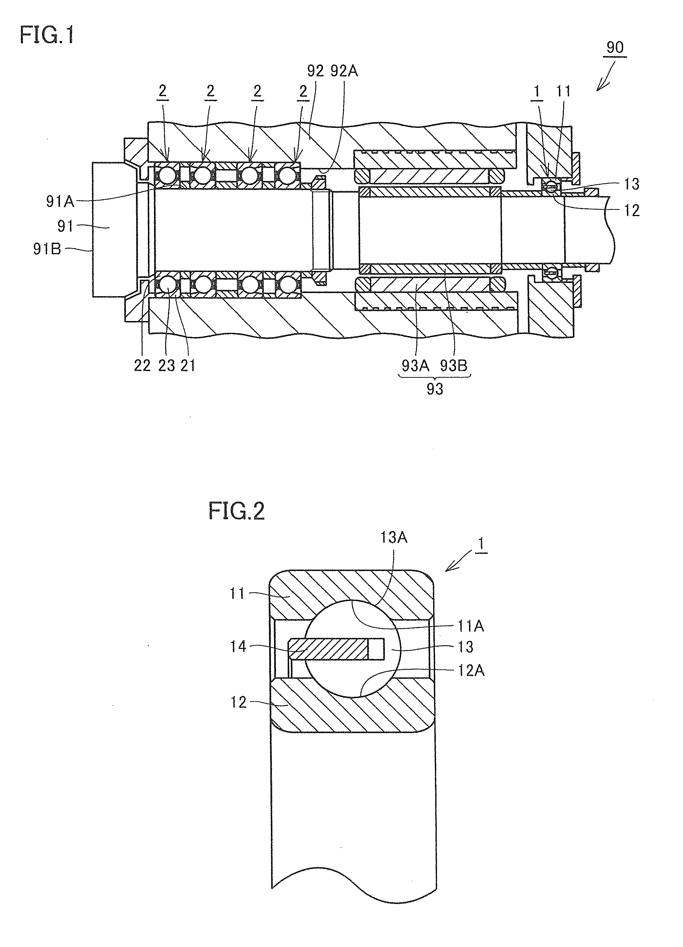

First, a structure of a machine tool in a first embodiment of the present invention will be described.
Referring to Fig. 1, a machine tool 90 in the present embodiment includes a main shaft 91 having a cylindrical shape, a housing 92 surrounding an outer circumferential surface of main shaft 91, and a deep groove ball bearing 1 (rear bearing) and angular contact ball bearings 2 (front bearings) serving as machine tool rolling bearings. Deep groove ball bearing 1 and angular contact ball bearings 2 are disposed to be fit between main shaft 91 and housing 92 such that respective outer circumferential surfaces of their outer ring 11 and outer ring 21 are in contact with an inner wall 92A of the housing, and respective inner circumferential surfaces of their inner ring 12 and inner ring 22 are in contact with an outer circumferential surface 91 A of main shaft 91. As such, main shaft 91 is supported to be axially rotatable relative to housing 92.

Further, at main shaft 91, a motor rotor 93B is installed to partially surround outer circumferential surface 91A. On inner wall 92A of housing 92, a motor stator 93A is installed at a position opposite to motor rotor 93B. Motor stator 93A and motor rotor 93B constitute a motor 93 (built-in motor). As such, main shaft 91 is rotatable relative to housing 92 by motive power provided from motor 93.

In other words, deep groove ball bearing 1 and angular contact ball bearings 2 are machine tool rolling bearings for supporting main shaft 91 of machine tool 90 to be rotatable relative to housing 92, which is a member disposed opposite to main shaft 91.

Next, operation of machine tool 90 is described. Referring to Fig. 1, when electric power is supplied to motor stator 93A of motor 93 from a not-shown power source, driving power for axially rotating motor rotor 93B is generated. Accordingly, main shaft 91, which is supported to be rotatable relative to housing 92 by angular contact ball bearings 2 and deep groove ball bearing 1, rotates together with motor rotor 93B relative to housing 92. With main shaft 91 thus rotating, a not-shown tool attached to a tip 91B of main shaft 91 cuts or grinds a workpiece. In this way, the workpiece can be processed.

Next, deep groove ball bearing 1 is described. Referring to Fig. 2, deep groove ball bearing 1 includes outer ring 11 serving as a first raceway member, inner ring 12 serving as a second raceway member, balls 13 serving as a plurality of rolling elements, and a cage 14. Outer ring 11 has an inner circumferential surface provided with an outer ring raceway surface 11A serving as a first raceway surface in an annular shape. Inner ring 12 has an outer circumferential surface provided with an inner ring raceway surface 12A serving as a second raceway surface in an annular shape opposite to outer ring raceway surface 11A. Each of outer ring raceway surface 11A and inner ring raceway surface 12A is formed as a deep groove. Further, each of the plurality of balls 13 is provided with a ball raceway surface 13A (surface of ball 13) serving as a rolling element contact surface. Balls 13 are in contact with outer ring raceway surfaces 11A and inner ring raceway surfaces 12A at ball raceway surfaces 13A, and are circumferentially arranged at a predetermined pitch by cage 14 in a crown shape, to be rollably held on an annular raceway. As such, outer ring 11 and inner ring 12 are rotatable relative to each other.

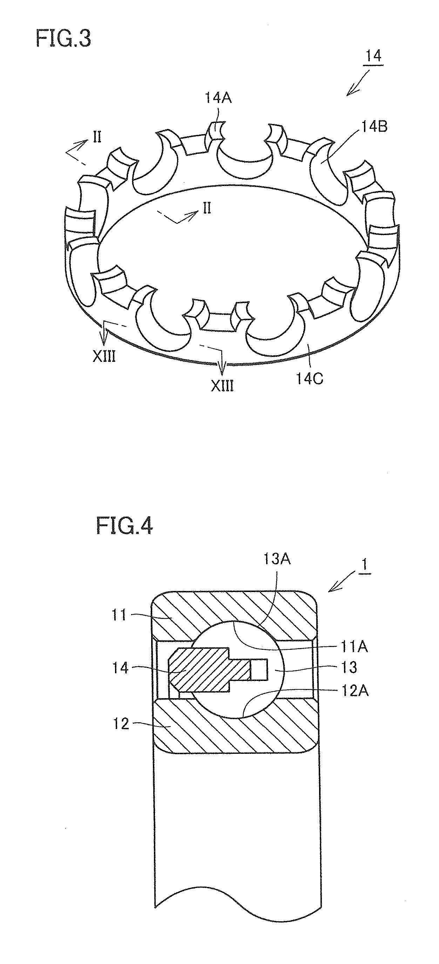

Referring now to Fig. 3, an example of cage 14 in the present embodiment is described. Cage 14 has a shape resulting from being forcedly extracted from a mold. By way of example, cage 14 in the present embodiment has a crown shape. The crown shape refers to a shape opening on one side of a pocket portion into which a rolling element is inserted. Cage 14 includes claw portions 14A, pocket portions (holding portions) 14B, and a main portion 14C. The plurality of pocket portions 14B for rollably holding balls 13 are provided in a circumferential direction of annular main portion 14C. Main portion 14C is integrally coupled to pocket portions (holding portions) 14B. The number of pocket portions 14B is not limited. There may be an odd number or an even number of pocket portions 14B.

A tip of each pocket portion 14B is provided with claw portions 14A arranged opposite to and at a distance from each other. Space between tips of opposite claw portions 14A is defined to be smaller than a diameter of ball 13. An inner circumferential surface of each pocket portion 14B has a spherical concave shape. A radius of curvature of this concave shape is defined to be slightly greater than a radius of curvature of the raceway surface of ball 13.

Cage 14 is made of a magnesium alloy by the injection molding described above, and can thus achieve rigidity similar to that of a conventional cage made of resin even when made thinner than the conventional cage. Further, since cage 14 can achieve similar rigidity when made thinner than the conventional cage made of resin, friction torque of cage 14 can be reduced by reducing shearing resistance of an oil film of lubricant.

In the above description, cage 14 is not limited to the shape shown in Fig. 2. Referring to Figs. 4 to 8, modifications of cage 14 in the present embodiment will be described. Cages 14 having the shapes in the modifications are made of a magnesium alloy, and thus still have high strength. In addition, with the shapes of the pocket portions in the modifications, the cage can be released from the mold with a force smaller than that used with a conventional shape.

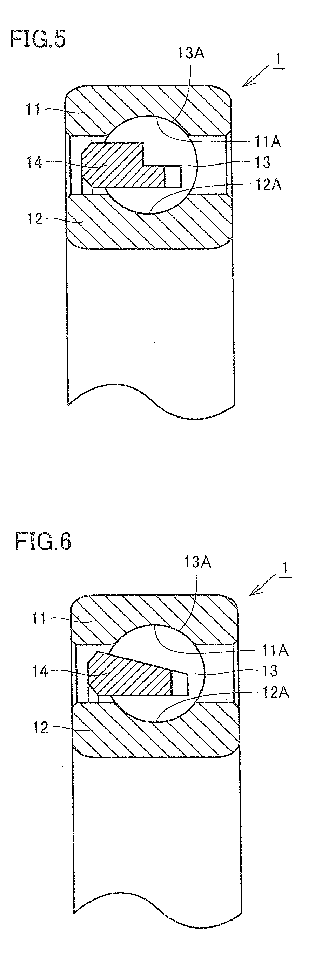

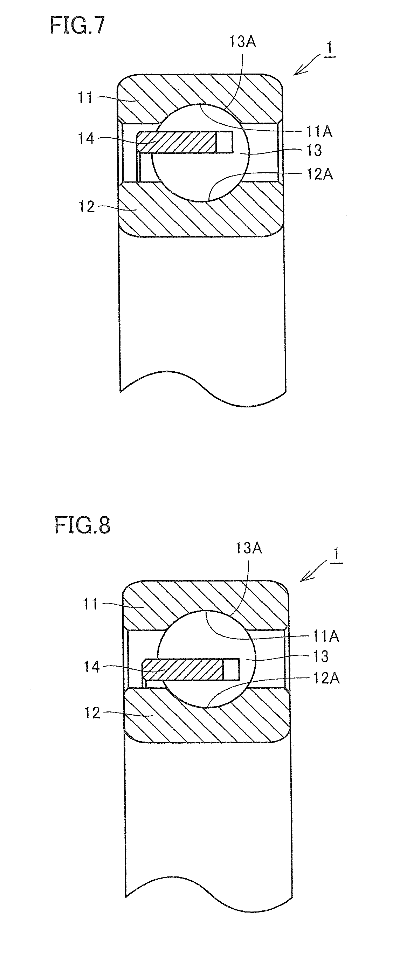

In a first modification shown in Fig. 4, when viewed cross-sectionally, a central portion of cage 14 is formed in a convex shape in an axial direction. In a second modification shown in Fig. 5, when viewed cross-sectionally, an inner circumferential portion of cage 14 is formed in a convex shape in the axial direction. In a third modification shown in Fig. 6, when viewed cross-sectionally, an outer circumferential surface of cage 14 is formed to decrease in cross section from a base toward a tip in the axial direction. In a fourth modification shown in Fig. 7, when viewed cross-sectionally, the outer circumferential surface of cage 14 is disposed closer to outer ring 11 relative to a center of ball 13. In a fifth modification shown in Fig. 8, when viewed cross-sectionally, an inner circumferential surface of cage 14 is disposed closer to inner ring 12 relative to the center of ball 13.

Further, cage 14 is made of a magnesium alloy such as AZ91D, and is molded by means of injection molding. Further, in cage 14, a void-including portion including a void formed by merging of flows of the magnesium alloy during the injection molding has been pushed out of a cavity portion, and has thus been eliminated from cage 14. Accordingly, cage 14 is a cage made of the magnesium alloy and having a light weight and high strength. Further, since cage 14 is made of the magnesium alloy by the injection molding described above, sufficient specific rigidity is secured in cage 14, which is a crown-shaped cage having claw portions 14A likely to be deflected and thus required to have high specific rigidity.

Furthermore, deep groove ball bearing 1 having cage 14 described above is a highly reliable rolling bearing suitable for a machine tool rolling bearing required to attain high-speed rotation.

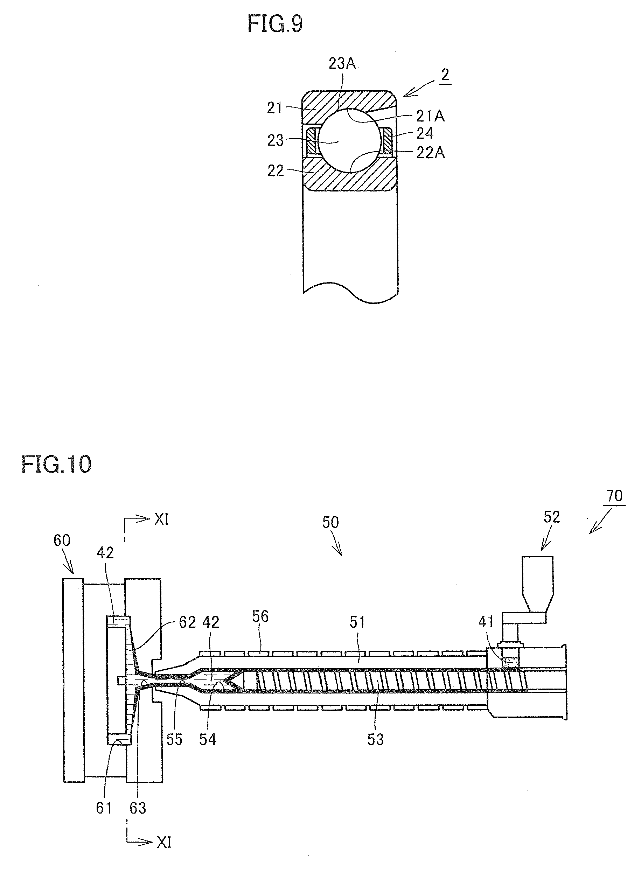

Next, angular contact ball bearing 2 is described. Referring to Figs. 1 and 9, angular contact ball bearing 2 and deep groove ball bearing 1 basically have the same structure and basically provide the same effect. However, angular contact ball bearing 2 is different from deep groove ball bearing 1 in shapes and the like of the bearing rings and the rolling elements.

Namely, angular contact ball bearing 2 includes outer ring 21 serving as a first raceway member, inner ring 22 serving as a second raceway member, balls 23 serving as a plurality of rolling elements, and a cage 24. Outer ring 21 has an inner circumferential surface provided with an outer ring raceway surface 21 A serving as a first raceway surface in an annular shape. Inner ring 22 has an outer circumferential surface provided with an inner ring raceway surface 22A serving as a second raceway surface in an annular shape opposite to outer ring raceway surface 21 A. Further, each of the plurality of balls 23 is provided with a ball raceway surface 23A (surface of ball 23) serving as a rolling element contact surface. Balls 23 are in contact with outer ring raceway surfaces 21 A and inner ring raceway surfaces 22A at ball raceway surfaces 23A, and are circumferentially arranged at a predetermined pitch by cage 24 in an annular shape, to be rollably held on an annular raceway. As such, outer ring 21 and inner ring 22 are rotatable relative to each other.

Here, in angular contact ball bearing 2, a straight line connecting a contact point between ball 23 and outer ring 21 to a contact point between ball 23 and inner ring 22 is angled relative to a radial direction (direction perpendicular to a rotation axis of angular contact ball bearing 2). Hence, angular contact ball bearing 2 is capable of receiving a radial load as well as an axial load. When the radial load is imposed, a component of force is generated in the axial direction (direction of the rotation axis of angular contact ball bearing 2). Referring to Fig. 1, in machine tool 90 of the present embodiment, two angular contact ball bearings 2 oriented in one direction are provided at a front side (side closer to tip 91B of main shaft 91), and two angular contact ball bearings 2 oriented in a direction opposite to the direction of angular contact ball bearings 2 located at the front side are provided at a rear side (side closer to motor rotor 93B), thus canceling the component of force.

Cage 24 is formed in an annular shape. Cage 24 may be formed in the same shape as crown-shaped cage 14 described above.

Next, a method of manufacturing a cage in the present embodiment will be described. First, an example of an injection molding device used in the present embodiment is described. Referring to Fig. 10, an injection molding device 70 in the present embodiment includes an injection unit 50 and a mold 60. Injection unit 50 includes a cylinder 51 having a cylindrical hollow portion, a supply portion 52 connected to the hollow portion of cylinder 51 for supplying magnesium alloy chips 41 to the hollow portion, a screw 53 fit in the hollow portion of cylinder 51 and having a helical groove formed in its outer circumferential surface, and a heater 56 disposed to surround cylinder 51. Cylinder 51 has a nozzle 55 formed at one end thereof and connected to mold 60. In addition, a reservoir 54 is formed adjacent to one end of screw 53. Reservoir 54 is a region surrounded by a tip of screw 53 (end closer to mold 60) and cylinder 51. Reservoir 54 is connected to mold 60 via nozzle 55. While an injection molding machine using magnesium alloy chips is illustrated in the present example, an injection molding machine using a bulk material such as a round bar, for example, is also suitably applicable.

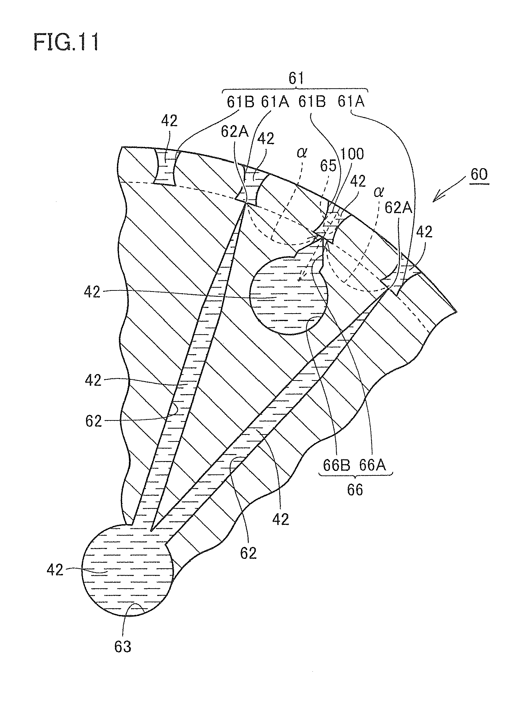

Referring to Figs. 10 and 11, mold 60 includes a sprue portion 63 which is a hollow region connected to nozzle 55 of cylinder 51, a cavity portion 61 which is a hollow region corresponding to the shape of the crown-shaped cage, and runner portions 62 radially extending from sprue portion 63 and connected to cavity portion 61. Each of runner portions 62 includes a gate portion 62A, and is connected to cavity portion 61 at gate portion 62A. Cavity portion 61 includes a weld region 65, which is a region at which flows of a magnesium alloy supplied from runner portions 62 to cavity portion 61 are merged. Mold 60 further includes an overflow portion 66 connected to weld region 65 for storing the magnesium alloy that has reached weld region 65 and flooded from cavity portion 61. Overflow portion 66 has a discharge portion 66A connected to weld region 65, and a retention portion 66B connected to discharge portion 66A.

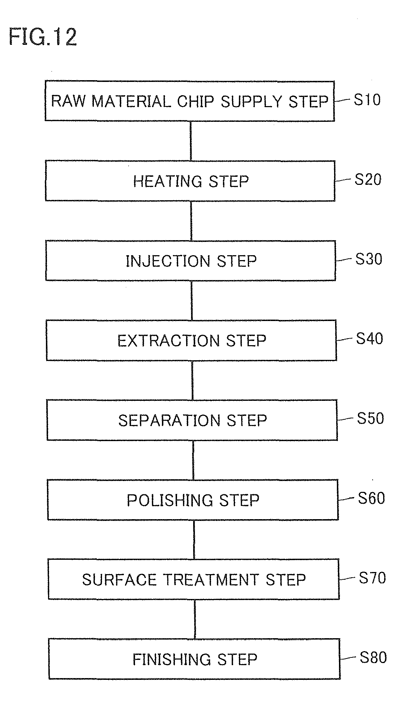

Referring now to Figs. 10 to 12, a method of manufacturing a cage using injection molding device 70 described above is described. Referring to Fig. 12, in the method of manufacturing a cage in the present embodiment, a raw material chip supply step is first performed as a step (S10). In this step (S10), referring to Fig. 10, magnesium alloy chips 41 are supplied from supply portion 52 of injection unit 50 into cylinder 51. From the viewpoint of environmental load, it is preferable to use a magnesium alloy regenerated or manufactured of a recycled material.

Next, a heating step is performed as a step (S20). In this step (S20), screw 53 rotates axially, causing magnesium alloy chips 41, which have been supplied into cylinder 51 in step (S10), to move along the helical groove formed in the outer circumferential surface of screw 53, while being heated by heater 56 to reach or exceed the melting point thereof. Accordingly, magnesium alloy chips 41 are brought into a molten state, i.e., become molten magnesium alloy 42, which is then stored in reservoir 54. On this occasion, molten magnesium alloy 42 may be in a completely molten state, i.e., have only a liquid phase with no solid phase, or may be in a semi-molten state in which magnesium in the solid phase ($\alpha$ phase) is dispersed in the liquid phase. In the case of the semi-molten state, however, a ratio of the solid phase is preferably small. Specifically, the ratio of the $\alpha$ phase is preferably less than 5%, and more preferably less than 2%, in area ratio when a cross section of the magnesium alloy after solidification thereof is observed. As a result, an interface of the α phase serves as a source of stress concentration in the completed cage, thereby suppressing reduction in fatigue strength and the like.

Next, an injection step is performed as a step (S30). In this step (S30), screw 53 is moved toward mold 60, to inject molten magnesium alloy 42, which was stored in reservoir 54 in step (S20), into mold 60. Referring to Fig. 11, molten magnesium alloy 42 thus injected into mold 60 is first supplied to sprue portion 63, and is then branched into the plurality of runner portions 62 to flow into cavity portion 61. On this occasion, in the case where the cage is to be shaped to have an even number of pocket portions for holding rolling elements as shown in Fig. 11, molten magnesium alloy 42 is injected from adjacent runner portions 62 into cavity portions 61A disposed to sandwich two pocket portions therebetween, i.e., disposed to come alternately in cavity portions 61, for example. Here, cavity portions 61 adjacent to each other (cavity portion 61 A and cavity portion 6 1 B) in Fig. 11 are coupled to each other at front and rear sides in the axial direction (forward and backward sides in the plane of sheet). Hence, the flows of molten magnesium alloy 42 supplied into the two cavity portions 61A from runner portions 62 are merged as indicated by broken line arrows α at weld region 65 formed in cavity portion 61B sandwiched between the two cavity portions 61 A. In weld region 65, the flows of molten magnesium alloy 42 are merged and thus become turbulent to involve gas therein, to form a void-including portion 100 including a void in molten magnesium alloy 42. When molten magnesium alloy 42 is further supplied to the two cavity portions 61A, molten magnesium alloy 42 is flooded from cavity portion 61 to flow into overflow portion 66 and is stored therein. Overflow portion 66 is connected to cavity portion 61 near weld region 65. Accordingly, void-including portion 100 formed in weld region 65 is pushed out to overflow portion 66 outside cavity portion 61 along a broken line arrow in the figure.

Next, an extraction step is performed as a step (S40). In this step (S40), the cage that was fabricated by the injection and solidification in mold 60 in step (S30) is extracted from mold 60. During release of the cage from mold 60, a temperature of mold 60 is maintained to be equal to or higher than a temperature close to a temperature of 300°C at which the magnesium alloy exhibits plastic deformability. For example, the temperature of mold 60 is maintained at 250°C or higher. The temperature of mold 60 is preferably maintained at 280°C or higher. The temperature of mold 60 is further preferably maintained at 300°C or higher. While being acceptable in terms of injection molding as long as being lower than the melting point of the magnesium alloy, the mold temperature is preferably maintained at 350°C or lower since a higher temperature requires a longer cooling period.

Further, a separation step is performed as a step (S50). The cage that was extracted in step (S40) has the magnesium alloy solidified in runner portions 62 and overflow portion 66. In this step (S50), such magnesium alloy in a region other than the cage itself is separated from the cage.

Here, in the present embodiment, referring to Fig. 11, runner portion 62 has a gate portion boundary surface, which is a surface of a boundary with cavity portion 61. The gate portion boundary surface has a cross sectional area smaller than the area of a cross section parallel to the gate portion boundary surface in a region adjacent to the gate portion boundary surface. More specifically, runner portion 62 decreases in area of a cross section perpendicular to a longitudinal direction thereof, toward cavity portion 61. At the gate portion boundary surface, runner portion 62 has the smallest cross sectional area. Further, overflow portion 66 has a discharge portion boundary surface, which is a surface of boundary with cavity portion 61. The discharge portion boundary surface has a cross sectional area smaller than the area of a cross section parallel to the discharge portion boundary surface in a region adjacent to the discharge portion boundary surface. Namely, as with runner portion 62, overflow portion 66 decreases in area of a cross section perpendicular to a longitudinal direction thereof, toward cavity portion 61. At the discharge portion boundary surface, overflow portion 66 has the smallest cross sectional area. Accordingly, the magnesium alloy (cage) solidified in cavity portion 61 and the magnesium alloy solidified in runner portion 62 can be readily separated from each other at the gate portion boundary surface. Likewise, the magnesium alloy (cage) solidified in cavity portion 61 and the magnesium alloy solidified in overflow portion 66 can be readily separated from each other at the discharge portion boundary surface. As a result, in the present embodiment, step (S40) and step (S50) can be performed simultaneously. In other words, when extracting the cage from mold 60, the magnesium alloy in the regions other than the cage can be separated from the cage. The present example has been illustrated by way of example. The decrease in cross sectional area may be continuous or intermittent, and the cross sections may have a round or rectangular shape, without particularly being limited as long as being acceptable in terms of functionality.

Next, a polishing step may be performed when necessary as a step (S60). In this step (S60), the cage that was separated in step (S50) is subjected to barrel polishing or polishing with a metallic brush made of brass or the like, and etching treatment with a chemical agent. Accordingly, the surface of the cage is cleaned and smoothed.

Next, a surface treatment step is performed when necessary as a step (S70). In this step (S70), the cage is subjected to surface treatment such as anodization treatment or plating treatment. Step (S70) is not an essential step in the method of manufacturing a cage of the present invention, yet improves corrosion resistance, grease resistance and wear resistance of the cage if performed.

Then, a finishing step is performed as a step (S80). In this step (S80), polishing treatment such as barrel polishing, performed when the surface treatment in step (S70) results in large irregularities at the surface, sealing treatment, overcoat treatment or the like is performed when necessary. With the steps described above, cage 14 in the present embodiment is completed.

In the method of manufacturing a cage in the present embodiment, the flows of molten magnesium alloy 42 are merged in step (S30) as described above, to form void-including portion 100 including a void in weld region 65 of cavity portion 61B. This void-including portion 100, however, is pushed out of the cage (cavity portion 61) because molten magnesium alloy 42 is flooded from cavity portion 61B to flow into overflow portion 66. As a result, void-including portion 100 is eliminated from the cage. Thus, strength reduction due to void-including portion 100 including a void remaining in the cage is suppressed. According to the method of manufacturing a cage using injection molding device 70 in the present embodiment, therefore, a cage made of a magnesium alloy and having a light weight and high strength can be manufactured.

It should be noted that whether or not void-including portion 100 has been pushed out of cavity portion 61 can be confirmed by examining the surface and cross section of the weld portion of the completed cage. Specifically, the weld portion formed between adjacent gates or around the rolling element holding portion of the cage has a characteristic external appearance, generally referred to as "weld line." In the cage manufactured with the manufacturing method according to the present invention, no weld line exists, or a trace of fluidity extending from the inside of the cage toward outside or a trace of removal of the overflow portion is observed. Depending on molding conditions, whether or not void-including portion 100 has been pushed out of cavity portion 61 may be confirmed by texture observation because the abundance of the $\alpha$ phase in the vicinity of the discharge portion is likely to be smaller than that in the vicinity of the gate portion due to the difference in cooling rate in the mold.

By combining the cage described above with the raceway members and the rolling elements, a rolling bearing is manufactured. Further, with this rolling bearing rotatably supporting the main shaft of the machine tool relative to the housing, a machine tool is manufactured.

A function and effect of the present embodiment will now be described.

The cage in the present embodiment is formed after void-including portion 100, which includes a void formed by the merging of the flows of the magnesium alloy including a liquid phase, is formed in the magnesium alloy during the injection molding, and void-including portion 100 is pushed out of cavity portion 61. Thus, strength reduction due to void-including portion 100 including a void remaining in cage 14 is suppressed, thereby providing cage 14 made of the magnesium alloy and having a light weight and high strength. Further, cage 14 is preferably manufactured by injecting, into mold 60, a magnesium alloy controlled to only have a liquid phase (controlled to not include a solid phase) by heating to fall within a temperature range equal to or higher than the melting point thereof. Accordingly, cage 14 made of the magnesium alloy, in which formation of a pure magnesium phase which is a segregation phase is suppressed and which has better fatigue strength, can be provided.

The cage in the present embodiment is molded into a shape resulting from being forcedly extracted from the mold. For a shape of a cage resulting from being forcedly extracted from a mold, high strength is required. While a cage made of a magnesium alloy and molded by means of conventional injection molding cannot achieve sufficiently high strength, high strength can be achieved by the injection molding of the present invention described above. Thus, the cage in the present embodiment may be formed into a shape resulting from being forcedly extracted from the mold. Cage14 in a crown shape, which is an example of a cage having a shape resulting from being forcedly extracted from a mold, is required to have high specific rigidity because claw portions 14 are likely to be deflected. Hence, cage 14 in the present embodiment made of the magnesium alloy and thus having high specific rigidity is suitably employed for crown-shaped cage 14.

The cage in the present embodiment is made of the magnesium alloy by the injection molding in the present embodiment, and can thus achieve rigidity similar to that of a conventional cage made of resin even when made thinner than the conventional cage. Further, the cage in the present embodiment can be made less likely to be deformed due to centrifugal force during use, and can thus be used for higher-speed rotation than a conventional cage made of resin.

Further, according to the cage in the present embodiment, pocket portion 14B of the cage can be made thin, thereby reducing an area of contact between ball 13 and pocket portion 14B. This can reduce friction torque generated by shearing of an oil film of lubricant between ball 13 and pocket portion 14B.

Moreover, according to the cage in the present embodiment, a continuously usable temperature (UL long-term heatproof temperature (no impact)) of fiber-reinforced 66 nylon resin containing 25% by mass of glass fiber which is an example of a material for a conventional cage made of resin is approximately 120°C, whereas a magnesium alloy is strong enough to withstand a service temperature limit of bearing steel. Accordingly, the material for the cage does not limit the service temperature of the bearing.

Furthermore, the cage in the present embodiment molded by means of injection molding of the magnesium alloy can readily be molded into a shape resulting from being forcedly extracted from a mold having a complicated shape. In addition, the cage in the present embodiment molded by means of injection molding is better in mass production than a general cage made of metal and manufactured by machining such as cutting.

The cage in the present embodiment is extracted, after the injection molding, from mold 60 having a temperature of 250°C or higher and 350°C or lower.

When forming crown-shaped cage 14 by means of injection molding, claw portions 14A are forcedly extracted from mold 60. Conventionally, with a magnesium alloy, the forced extraction has been difficult because the magnesium alloy itself is a material having low ductility, and because claw portions 14A have high rigidity. A magnesium alloy is a brittle material having very high rigidity at a low temperature, yet has the property of exhibiting plastic deformability at a high temperature of 300°C or higher. Thus, by maintaining the mold temperature during release of cage 14 from mold 60 to be equal to or higher than a temperature close to a temperature at which the magnesium alloy exhibits plastic deformability, e.g., to be equal to or higher than 250°C, the magnesium alloy can be made less brittle. The cage can thus be released readily from the mold, thereby improving working accuracy. In addition, with the shapes of pocket portions 14B in the modifications, the cage can be released from the mold with a force smaller than that used with a conventional shape. The temperature of mold 60 is preferably maintained at 280°C or higher. The temperature of mold 60 is further preferably maintained at 300°C or higher. While being acceptable in terms of injection molding as long as being lower than the melting point of the magnesium alloy, the temperature of mold 60 is preferably maintained at 350°C or lower since a higher temperature requires a longer cooling period.

According to the cage in the present embodiment, the magnesium alloy is one of Mg-Al-Zn-Mn-based, Mg-Al-Mn-based, and Mg-Al-Si-Mn-based, and is thus suitable for injection molding. By employing such magnesium alloy, the cage in the present embodiment can be readily manufactured. Examples of the Mg-Al-Zn-Mn-based magnesium alloy include AZ91D of the ASTM standard. Examples of the Mg-Al-Mn-based magnesium alloy include AM60B of the ASTM standard. Examples of the Mg-Al-Si-Mn-based magnesium alloy include AS41A of the ASTM standard.

The rolling bearing in the present embodiment includes outer ring 11 and inner ring 12 serving as raceway members, balls 13 serving as a plurality of rolling elements arranged in contact with outer ring 11 and inner ring 12, and cage 14 in the present embodiment for rollably holding balls 13.

As such, cage 14 in the present embodiment made of the magnesium alloy and having a light weight and high strength is employed, thereby providing highly reliable deep groove ball bearing 1 suitable for high-speed rotation.

The machine tool in the present embodiment includes main shaft 91 of machine tool 90, housing 92 disposed opposite to outer circumferential surface 91A of main shaft 91, and the rolling bearing in the present embodiment for rotatably supporting main shaft 91 relative to housing 92.

A main shaft of a machine tool rotates at a very high rotating speed. Hence, a cage of a rolling bearing for supporting it (machine tool rolling bearing) is required to have high strength and a light weight. Further, when rigidity is insufficient for centrifugal force resulting from the high rotating speed of the machine tool rolling bearing, the cage is deformed to disadvantageously result in lowered rotation precision of the bearing (NRRO (Non-Repeatable Run-Out); increased asynchronous vibration) and greater heat generation in the bearing.

The machine tool in the present embodiment includes deep groove ball bearing 1 in the present embodiment having cage 14 made of the magnesium alloy and having not only high strength and a light weight but also high specific rigidity. Accordingly, highly reliable machine tool 90 suitable for high-speed rotation can be provided.

According to the method of manufacturing a cage in the present embodiment, void-including portion 100, which includes a void formed by the merging of the flows of the magnesium alloy including a liquid phase, is formed in the magnesium alloy, and void-including portion 100 is pushed out of the cavity portion. Thus, strength reduction due to void-including portion 100 including a void remaining in cage 14 is suppressed. Accordingly, cage 14 made of the magnesium alloy and having a light weight and high strength can be manufactured.

According to the method of manufacturing a cage in the present embodiment, the cage is molded into a shape resulting from being forcedly extracted from the mold. Cage 14 in a crown shape, which is an example of a shape resulting from being forcedly extracted from a mold, is required to have high specific rigidity because claw portions 14 are likely to be deflected. Hence, the method of manufacturing a cage in the present embodiment, which is capable of manufacturing cage 14 made of the magnesium alloy and thus having high specific rigidity, is suitable for manufacturing a crown-shaped cage.

According to the method of manufacturing a cage in the present embodiment, in the step of extracting cage 14 from mold 60, the temperature of mold 60 is set to 250°C or higher and 350°C or lower. By maintaining the mold temperature during release of the cage from mold 60 to be equal to or higher than a temperature close to a temperature at which the magnesium alloy exhibits plastic deformability, e.g., to be equal to or higher than 250°C, the magnesium alloy can be made less brittle. The cage can thus be released readily from the mold, thereby improving production efficiency. In addition, with the shapes of pocket portions 14B in the modifications, the cage can be released from the mold with a force smaller than that used with a conventional shape. The temperature of mold 60 is preferably maintained at 280°C or higher. The temperature of mold 60 is further preferably maintained at 300°C or higher. While being acceptable in terms of injection molding as long as being lower than the melting point of the magnesium alloy, the temperature of mold 60 is preferably maintained at 350°C or lower since a higher temperature requires a longer cooling period.

(Second Embodiment)

Next, a second embodiment which is another embodiment of the present invention will be described. A cage and a rolling bearing in the second embodiment have structures similar to those in the first embodiment, provide similar effects, and can be manufactured in a similar manner. While the cage in the first embodiment has the even number of pocket portions for holding the rolling elements, the cage in the second embodiment has an odd number of pocket portions. Accordingly, the first embodiment and the second embodiment are different from each other in structure of the mold used for injection molding. The second embodiment is otherwise similar to the first embodiment, and the same or corresponding parts are designated with the same numerals to avoid repeating descriptions thereof.

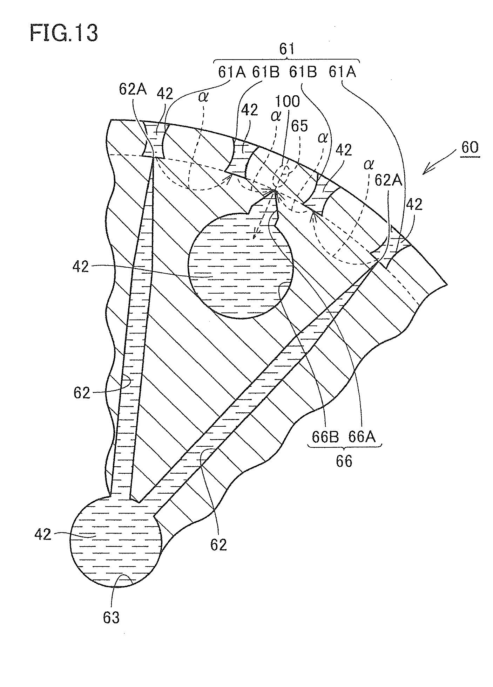

Referring to Fig. 13, in the case where the cage is to be shaped to have an odd number of pockets for holding rolling elements in the second embodiment, molten magnesium alloy 42 is injected from adjacent runner portions 62 into cavity portions 61A disposed to sandwich three pockets therebetween, i.e., disposed to come every three cavity portions 61, for example. Here, cavity portions 61 adjacent to each other in Fig. 13 are coupled to each other at front and rear sides in the axial direction (forward and backward sides in the plane of sheet). Hence, the flows of molten magnesium alloy 42 supplied into the two cavity portions 61 A from runner portions 62 come into two cavity portions 61B sandwiched between the two cavity portions 61A, and are merged at weld region 65 formed in a center between the two cavity portions 61B (front or rear side in the plane of sheet), as indicated by broken line arrows α. When molten magnesium alloy 42 is further supplied to the two cavity portions 61 A, molten magnesium alloy 42 is flooded from the cavity portions to flow into overflow portion 66 and is then stored therein.

Also in the present embodiment, as with the first embodiment, the flows of molten magnesium alloy 42 are merged in step (S30) to form void-including portion 100 including a void in weld region 65. In the second embodiment, weld region 65 is located in a central portion of the pockets, which is a thin region of the cage (central portion in the circumferential direction of the cage). For this reason, if void-including portion 100 including a void remains in this region, the strength of the cage is likely to be less sufficient than that in the first embodiment. This void-including portion 100, however, is pushed out of cavity portion 61 because molten magnesium alloy 42 is flooded from cavity portion 61 to flow into overflow portion 66. As a result, void-including portion 100 is eliminated from the cage. Thus, strength reduction due to void-including portion 100 including a void remaining in the cage is suppressed. As such, the present invention can be particularly effectively applied in the case where void-including portion 100 is formed in the thin region thin of the cage.

While the ASTM standard AZ91D is illustrated in the above embodiments as the magnesium alloy applicable to the present invention, the magnesium alloy applicable to the present invention is not limited to this, but various types of magnesium alloys for die casting are applicable. Examples of the magnesium alloy usable in the present invention include an alloy obtained by adding aluminum (Al), zinc (Zn), manganese (Mn), silicon (Si) or the like to magnesium (Mg), which is a main component. In order to improve incombustibility, heat resistance or toughness, calcium (Ca) or gadolinium (Gd), copper (Cu), iron (Fe), nickel (Ni), a rare earth element or the like may be added thereto when necessary. Specifically, a Mg-Al-Zn-Mn-based alloy such as AZ91D of the ASTM standard, a Mg-Al-Mn-based alloy such as AM60B, or a Mg-Al-Si-Mn-based alloy such as AS41A can be employed.

Further, while not particularly being limited, the volume of overflow portion 66 is preferably not less than 5% of the volume of cavity portion 61 in order to securely eliminate the confluence portion from the cage (product), and more preferably not less than 10% thereof in order to eliminate the confluence portion more securely. On the other hand, in view of material yield, less wasted material is more preferable. Hence, the volume of overflow portion 66 is preferably not more than 30% of the volume of cavity portion 61.

Further, various methods can be employed to separate (remove) the magnesium alloy solidified in runner portion 62 and overflow portion 66 from the cage in step (S50). Specific examples of a method include machining employing a pressing machine, such as a trimming process, a barrel process, or a cutting process.

In addition, molding methods such as a hot nozzle or hot runner method allowing for reduction of an amount of the magnesium alloy solidified in sprue portion 63 and runner portion 62, and an in-mold gate cut method in which a gate is cut in a mold can be suitably used. It should be noted that the in-mold process is capable of removing not only the magnesium alloy solidified in sprue portion 63 and runner portion 62 but also the magnesium alloy solidified in overflow portion 66.

Furthermore, while the surface treatment can be performed before or after removing the magnesium alloy solidified in sprue portion 63, runner portion 62 and overflow portion 66, it is preferably performed after the removal. Specific examples of surface treatment include plating treatment using a metal excellent in corrosion resistance, resin coating, conversion treatment or anodization treatment for altering the surface into magnesium hydroxide or magnesium oxide. Among these, it is particularly preferable to employ the anodization treatment because it is less likely to result in insufficient adhesion at an interface and allows for excellent corrosion resistance and wear resistance. It should be noted that, since the anodization treatment often results in a high degree of surface roughness, when necessary, polishing treatment such as barrel polishing, sealing with a resin material, or sealing by steam treatment, boiling water treatment, or chemical treatment using a nickel acetate solution, or overcoat treatment may be performed after the surface treatment. If the polishing treatment is performed, an amount of polishing can be equal to or smaller than the thickness of an alteration layer formed through the surface treatment in order to leave the alteration layer. A thickness of approximately 3 $\mu$m or greater of the alteration layer is acceptable in terms of functionality, yet the thickness is preferably 5 $\mu$m or greater in terms of durability because the cage includes a slide portion in contact with a rolling element or a bearing ring. Increase in thickness of the alteration layer leads to improved wear resistance and corrosion resistance, yet also results in change in shape such as growth of recesses (increase in surface roughness) and volumetric expansion, both of which are involved in the alteration. Accordingly, the thickness is preferably 20 $\mu$m or smaller, and is particularly preferably 10 $\mu$m or smaller.

It should be noted that the cage of the present invention is applicable to a rolling bearing including a cage having a shape resulting from being forcedly extracted from a mold, and can be suitably employed without a particular limitation on a type of rolling bearing. Further, a type of a guide in the cage is not particularly limited, and the present invention is applicable to any type of guide such as a rolling element guide, an outer ring guide, and an inner ring guide.

(Example)

An example will be described below.

First, the thickness of claw portions of a crown-shaped cage made of a magnesium alloy in the present example was compared to that of a conventional crown-shaped cage made of resin, and studied. The claw portions of the crown-shaped cage are deformed due to centrifugal force. Thus, the crown-shaped cage is designed such that tips of the claw portions will not be in contact with an outer ring during operation. Deformation of the claw portions was analyzed in terms of material mechanics, as a bending problem of a rectangular cantilever. The details of the analysis will be described below.

It was assumed that a uniformly-distributed load by centrifugal force acted on a claw portion (beam). Namely, a load $w_0$ per unit length is expressed as an equation (1) by using a mass m per unit length, an average radius r, and a rotation speed $\omega$:

$$w_0 = mr\omega^2 \qquad \cdots(1)$$

A deflection curve Y (x) of the beam is expressed as an equation (2) by using a Young's modulus E, a second moment of area I, an axial coordinate x, and a length L of the beam:

$$Y(x) = -\frac{w_0}{24EI}\left(x^4 - 4Lx^3 + 6L^2x^2\right) \qquad \cdots(2)$$

An amount of displacement of an end at an unconstrained side, which is the maximum amount of displacement, is expressed as an equation (3):

$$Y(L) = -\frac{w_0 L^4}{8EI} \qquad \cdots(3)$$

A required thickness of the claw portion when using nylon (PA66, which contains 25% of glass fiber), a material for the conventional crown-shaped cage made of resin, was defined as h, and a required thickness when using a magnesium alloy (AZ91D), a material for the crown-shaped cage in this example, was defined as ah (0 < a <).

A ratio of a Young's modulus $E_{Mg}$ (45 GPa) of the magnesium alloy (AZ91D) to a Young's modulus $E_{PA}$ (7.6 GPa) of the aforementioned nylon is expressed as an equation (4):

$$\frac{E_{Mg}}{E_{PA}} = \frac{45}{7.6} \qquad \cdots(4)$$

A ratio of density $\rho_{Mg}$ (1820 kg/m$^3$) of the magnesium alloy to density $\rho_{PA}$ (1310 kg/m$^3$) of the nylon is expressed as an equation (5):

$$\frac{\rho_{Mg}}{\rho_{PA}} = \frac{1820}{1310} \qquad \cdots(5)$$

Second moment of area I of the rectangular beam is expressed as an equation (6) by using a width b of the beam and a thickness H of the beam:

$$I = \frac{bH^3}{12} \qquad \cdots(6)$$

When the respective crown-shaped cages were designed such that a maximum amount of displacement of the claw portion made of the magnesium alloy and a maximum amount of displacement of the claw portion made of the nylon were equal to each other, a was 0.48 as indicated in an equation (7):

$$\left.\begin{aligned} \frac{w_{0PA}}{8E_{PA}I_{PA}} &= \frac{w_{0Mg}}{8E_{Mg}I_{Mg}} \\ \frac{\rho_{PA}bhr\omega^2}{8E_{PA}I_{PA}} &= \frac{{}^{1820}\!/_{1310}\,\rho_{PA}bahr\omega^2}{8\,{}^{45}\!/_{7.6}\,E_{PA}a^3 I_{PA}} \\ a &= 0.48 \end{aligned}\right\} \qquad \cdots(7)$$

Namely, it was found that the thickness of the claw portion could be reduced approximately by half by changing the material for the crown-shaped cage from the nylon to the magnesium alloy.

Next, friction torque resulting from shearing resistance of an oil film of lubricant between the balls and the crown-shaped cage made of the magnesium alloy in this example was compared to that of the conventional crown-shaped cage made of resin, and studied.

Due to the difference in radius of curvature between the ball and a pocket surface of the cage, an oil film thickness h and a shearing speed V vary from point to point in a contact surface. Accordingly, the shearing resistance also has a distribution. By determining searing resistance per unit area in each point, and integrating the results across the pocket surface, shearing resistance on that pocket surface can be determined. A shearing resistance $F_p$ acting relatively in an x direction, which is a tangential direction of a point of contact between the ball and the cage, is expressed as an equation (8). It should be noted that $\eta_0$ refers to lubricant viscosity.

$$F_p = \int\!\!\int \tau(x,y)\,dxdy = \int\!\!\int \frac{\eta_0 V(x,y)}{h(x,y)}\,dxdy \qquad \cdots(8)$$

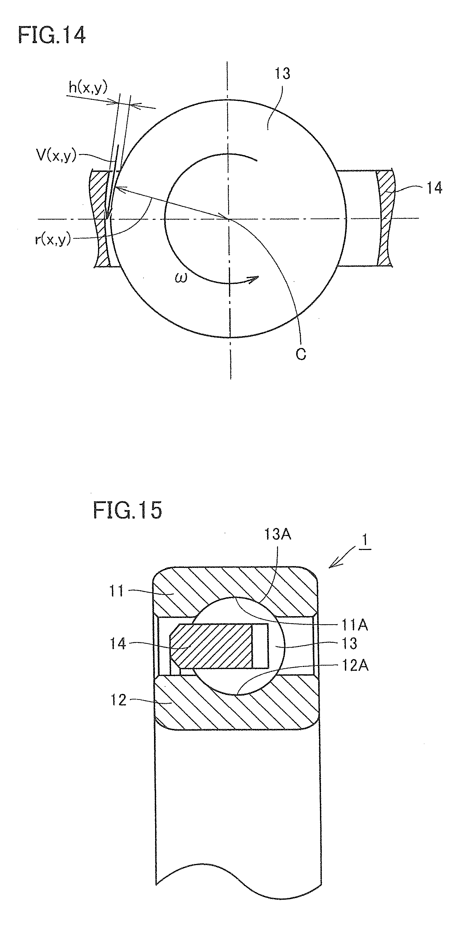

Referring to Fig. 14, a shearing speed V (x, y) is expressed as an equation (9) by using a rotation angular velocity $\omega$ around a rotation center C of ball 13, and a distance r (x, y) from the rotation axis of the ball to the surface of ball 13 at the point of contact with cage 14 with the oil film interposed therebetween:

$$V(x,y) = r(x,y)\omega \qquad \cdots(9)$$

An oil film thickness h (x, y) is expressed as an equation (10):

$$h(x,y) = h'(x,y) + h_{\min} \qquad \cdots(10)$$

An oil film thickness h' (x, y), a clearance in a direction perpendicular to the rotation axis of the ball, which is provided from the difference in curvature when it is assumed that the completely spherical ball and the pocket surface are in contact with each other, was numerically determined. In addition, assuming that the ball and the pocket surface are in contact with each other with their respective projections of the maximum roughness in a portion where they are closest to each other, an oil film thickness $h_{min}$ in this portion was defined as one-half of a sum of maximum roughnesses of the ball and the cage. Shearing resistance $F_p$ is inversely proportional to oil film thickness h. Thus, assuming that a ball in a non-loaded region is located in a center of a pocket portion, oil film thickness h is of a very high order of approximately 0.01 mm. In designing a normal bearing, therefore, shearing resistance $F_p$ in the non-loaded region is ignorable.

It has been demonstrated that this friction torque resulting from the shearing resistance of the oil film matches actual measurement when it is assumed that a ball in a non-loaded region is located in a center of a pocket portion, and a ball in a loaded region is in contact with a pocket portion with an oil film having a thickness which is one-half of maximum roughness of the pocket portion interposed therebetween (Fujiwara, Fujii, Proceedings of the Autumn Meeting of the Japan Society for Precision Engineering, 2001, pp. 562-563).

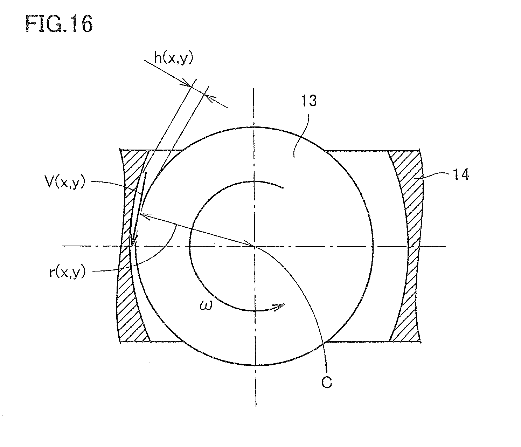

A crown-shaped cage made of nylon shown in Figs. 15 and 16, which is a conventional crown-shaped cage made of resin, and a crown-shaped cage made of a magnesium alloy, in which the thickness of pocket portions was reduced by half based on the above analysis, were compared to each other in terms of friction torque resulting from shearing resistance of an oil film under the conditions indicated in Table 1:

[Table 1]

| Bearing Model Number | 6206 |
|---|---|
| Inner Ring Rotation Speed | 3000 min$^{-1}$ |
| Radial Load | 1500 N |
| Radial Clearance | 0.01 mm |
| Lubricant Kinematic Viscosity | 32 mm$^2$/s |

That is, the comparison was made with the bearing model number 6206 (JIS standard), the inner ring rotation speed of 3000 min$^{-1}$, the radial load of 1500 N, the radial clearance of 0.01 mm, and the lubricant kinematic viscosity of 32 mm$^2$/s. When the friction torque of the crown-shaped cage made of the nylon was defined as 1, the friction torque of the crown-shaped cage made of the magnesium alloy was 0.7. As shown in Figs. 14 and 16, while the area of the pocket portion was reduced by half, a portion where the oil film is relatively thin inevitably remains. Accordingly, the friction torque could not be reduced by half, but was 0.7 times as a result of the analysis.

It was therefore found that torque could be reduced by fabricating a crown-shaped cage with a magnesium alloy to reduce the thickness of pocket portions.

It should be understood that the embodiments and examples disclosed herein are illustrative and non-restrictive in every respect. The scope of the present invention is defined by the terms of the claims, rather than the description above, and is intended to include any modifications within the scope and meaning equivalent to the terms of the claims.

INDUSTRIAL APPLICABILITY

The present invention is particularly advantageously applicable to a cage made of a magnesium alloy, a rolling bearing including the cage, a machine tool including the rolling bearing, and a method of manufacturing the cage.

REFERENCE SIGNS LIST

1 deep groove ball bearing; 2 angular contact ball bearing; 11, 21 outer ring; 11 A, 21 A outer ring raceway surface; 12, 22 inner ring; 12A, 22A inner ring raceway surface; 13, 23 ball; 13A, 23A ball raceway surface; 14, 24 cage; 14A claw portion; 14B pocket portion; 14C main portion; 41 magnesium alloy chip; 42 molten magnesium alloy; 50 injection portion; 51 cylinder; 52 supply portion; 53 screw; 54 reservoir; 55 nozzle; 56 heater; 60 mold; 61, 61A, 61B cavity portion, 62 runner portion; 62A gate portion; 63 sprue portion; 65 weld region; 66 overflow portion; 66A discharge portion; 66B retention portion; 70 injection molding device; 90 machine tool; 91 main shaft; 91A:outer circumferential surface; 91B tip; 92 housing; 92A inner wall; 93 motor; 93A motor stator; 93B motor rotor, 100 void-including portion.

**Claims**

1.  A cage (14) for holding a rolling element (13) in a rolling bearing (1), comprising:

    a holding portion (14B) for rollably holding said rolling element (13); and
    a main portion (14C) integrally coupled to said holding portion (14B), wherein
    the cage (14) including said holding portion (14B) and said main portion (14C) is made of a magnesium alloy,
    said magnesium alloy being molded by means of injection molding using a mold (60) including a cavity portion
    (61) having a shape corresponding to a shape of said cage (14), and has a shape resulting from being forcedly
    extracted from said mold (60).

2.  The cage (14) according to claim 1, wherein
    said cage (14) is extracted, after said injection molding, from said mold (60) having a temperature of 250°C or higher
    and 350°C or lower.

3.  The cage (14) according to claim 1, wherein
    said magnesium alloy is one of Mg-Al-Zn-Mn-based, Mg-Al-Mn-based, and Mg-Al-Si-Mn-based.

4.  A rolling bearing (1) comprising:

    a raceway member (11, 12);
    a plurality of rolling elements (13) arranged in contact with said raceway member (11, 12); and
    the cage (14) according to claim 1 for rollably holding said rolling element (13).

5.  A machine tool (90) comprising:

    a main shaft (91) of the machine tool (90);
    a housing (92) disposed opposite to an outer circumferential surface of said main shaft (91); and
    the rolling bearing (1) according to claim 4 for rotatably supporting said main shaft (91) relative to said housing
    (92).

6.  A method of manufacturing a cage (14) for holding a rolling element (13) in a rolling bearing (1), comprising the steps of:

    causing a liquid phase of a magnesium alloy by heating said magnesium alloy;
    molding said magnesium alloy, which includes the liquid phase caused, into a shape for being forcedly extracted
    from a mold (60) of said cage (14), by injecting said magnesium alloy into said mold (60) including a cavity
    portion (61) having a shape corresponding to a shape of said cage (14) to fill said cavity portion (61) with said
    magnesium alloy; and
    extracting, from said mold (60), said cage (14) made of said magnesium alloy thus molded into the shape for
    being forcedly extracted from said mold (60) of said cage (14), wherein
    in said step of molding said magnesium alloy into the shape for being forcedly extracted from said mold (60) of
    said cage (14), a void-including portion (100), which includes a void formed by merging of flows of said magnesium
    alloy including the liquid phase, is formed in said magnesium alloy, and said void-including portion (100) is
    pushed out of said cavity portion (61).

7.  The method of manufacturing a cage (14) according to claim 6, wherein
    in said step of extracting said cage (14) from said mold (60), a temperature of said mold (60) is set to 250°C or
    higher and 350°C or lower.

FIG.1

FIG.2

FIG.3

14

14A

14B

II

II

XIII

XIII

14C

FIG.4

13A

1

11

11A

14

13

12A

12

FIG.5

FIG.6

FIG.7

FIG.8

## FIG.9

## FIG.10

FIG.11

FIG.12

| RAW MATERIAL CHIP SUPPLY STEP | — S10 |

| HEATING STEP | — S20 |

| INJECTION STEP | — S30 |

| EXTRACTION STEP | — S40 |

| SEPARATION STEP | — S50 |

| POLISHING STEP | — S60 |

| SURFACE TREATMENT STEP | — S70 |

| FINISHING STEP | — S80 |

FIG.13

FIG.14

FIG.15

## FIG.16

## INTERNATIONAL SEARCH REPORT

| International application No. |
|---|
| PCT/JP2010/065820 |

A. CLASSIFICATION OF SUBJECT MATTER

*F16C33/44*(2006.01)i, *B22D17/00*(2006.01)i, *B22D17/22*(2006.01)i, *F16C19/06*
(2006.01)i, *F16C33/41*(2006.01)i

According to International Patent Classification (IPC) or to both national classification and IPC

B. FIELDS SEARCHED

Minimum documentation searched (classification system followed by classification symbols)
F16C33/44, B22D17/00, B22D17/22, F16C19/06, F16C33/41

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2000-213544 A (NSK Ltd.), 02 August 2000 (02.08.2000), entire text (Family: none) | 1-7 |
| Y | JP 2004-156687 A (NSK Ltd.), 03 June 2004 (03.06.2004), paragraph [0020] (Family: none) | 1-7 |
| Y | JP 2002-263820 A (Toshiba Corp.), 17 September 2002 (17.09.2002), paragraph [0039] & US 2002/0126445 A1 | 6-7 |

☐ Further documents are listed in the continuation of Box C.  ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 01 November, 2010 (01.11.10) | 22 November, 2010 (22.11.10) |

| Name and mailing address of the ISA/<br>Japanese Patent Office | Authorized officer |
|---|---|
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000161365 A
- JP 2001271841 A

- JP 2000213544 A

**Non-patent literature cited in the description**

- *Proceedings of the Autumn Meeting of the Japan Society for Precision Engineering,* 2001, 562-563